# EUROPEAN PATENT APPLICATION

(11) **EP 2 829 773 A2**
(43) Date of publication of application: **28.01.2015**
(21) Application number: 14172368.4
(22) Date of filing: 13.06.2014
(51) Int. Cl.: F16H 61/16, F16H 59/54, F16H 61/02

(54) **Automated transmission control apparatus**

(30) Priority: 28.06.2013 JP 2013137095
(71) Applicant: AISIN SEIKI KABUSHIKI KAISHA, Kariya-shi, Aichi 448-8650 (JP)
(72) Inventor: Harada, Shinya, Kariya-shi, Aichi 448-8650 (JP); Murakami, Yoshihiro, Kariya-shi, Aichi 448-8650 (JP); Tanimoto, Eiichi, Kariya-shi, Aichi 448-8650 (JP)
(74) Representative: Kramer Barske Schmidtchen Patentanwälte PartG mbB

(57) **Abstract**

An automated transmission control apparatus includes an accelerated/decelerated travelling determination portion (11) determining a decelerated travelling state and an accelerated traveling state, a gear stage determination portion (13) determining a gear stage to be changed to, on the basis of at least one down-shift curve, on the basis of a travelling state, and a shift operation control portion (13) controlling a clutch actuator (29) in a case where the accelerated/decelerated travelling determination portion determines a sudden braking state, the shift operation control portion controlling the shift actuator to move at least one sleeve (61 a, 62a, 63a) to a neutral position in a case where the gear stage determination portion determines that the down-shift curve is crossed, the shift operation control portion maintaining all the sleeves in a stand-by state at the neutral position while the accelerated/decelerated travelling determination portion maintains the determination of the sudden braking state.

## Description

### TECHNICAL FIELD

This disclosure generally relates to an automated transmission control apparatus.

### BACKGROUND DISCUSSION

In order to transmit rotations and/or torque from a driving apparatus used for drive, for example, an engine and/or an electric motor, to a driving wheel according to travelling circumstances of a vehicle, a conventional powertrain of a vehicle is provided with a transmission for changing the torque and/or a rotational speed of the rotations of the driving apparatus. Among some types of transmission, for example, a normally-meshed type is known, where plural idler gears which are fitted to a rotary shaft connected to the drive wheel so that the idler gears are rotatable relative to the rotary shaft and are not movable in an axial direction of the rotary shaft, and plural gears which are provided at a counter shaft arranged in parallel with the rotary shaft are always meshed with each other. According to the known normally-meshed-type transmission, a sleeve that is spline-fitted to the rotary shaft to be movable in the axial direction is arranged side-by-side with the idler gear, and engaging teeth provided at a joining surface of the sleeve which joins to the idler gear are engaged with engaged teeth provided at a joined surface of the idler gear so that the idler gear and the rotary shaft, which are engaged with each other, rotate integrally with each other. The idler gear rotating integrally with the rotary shaft, and the gear provided at the counter shaft and meshing with the idler gear rotate in an associated manner, and thus the torque and/or the rotational speed of the rotary shaft is transmitted to the counter shaft. Out of the plural idler gears which include different numbers of teeth from each other, the idler gear which is to be rotated integrally with the rotary shaft is selected and the sleeve is brought to be engaged with the selected idler gear, and thus a shifting movement is performed.

In a case of the known normally-meshed-type transmission which uses a dog clutch and is provided with a gear configuration that does not include a synchronization mechanism such as a synchronizer ring, for protecting the engaging teeth and the engaged teeth, rotational speed synchronization is generally performed at the shift operation. The rotational speed synchronization is performed using an engine rotational speed and a clutch so that the engine rotational speed is synchronized with a rotational speed that corresponds to an input rotational speed. The rotational speed that corresponds to the input rotational speed is obtained by multiplying an output rotational speed by a gear ratio of a requested gear stage.

Depending on travelling states of the vehicle, a sudden braking is needed in some cases to assure safe running. In a case where the sudden braking is applied, a significant or noticeable failure, for example, engine stall and/or deterioration of driveability at shifting, tends to be caused by responses of a clutch and/or the automated transmission. Thus, in a case of the sudden braking operation, a target clutch torque needs to be set at zero (0) quickly and the clutch needs to be released. In order to release the clutch in the above-described manner, a control method is described in JP2012-112496A (hereinafter referred to as Patent reference 1), in which the clutch is reliably controlled to be in a disconnected state so that the engine stall is prevented from occurring in a case where the sudden braking state is established.

Patent reference 1, however, describes only the feature that the clutch is reliably disconnected in a case where the sudden braking state is generated. Because a vehicle speed decreases rapidly when the sudden braking is applied, a gear stage may need to be moved to a lower gear stage while skipping plural gear stages interposed between the current gear stage and the lower gear stage in some cases. In such a case, if a shift engagement operation or a preparatory operation for the shift engagement is performed at each of the interposed gear stages, a great burden is applied to a shift actuator performing the shift engagement. As a result, an extra driving electric power may be used and the shifting to the requested gear stage may be time-consuming.

A need thus exists for an automated transmission control apparatus at which a needless shift operation is restrained and a rapid shifting movement is performed at a sudden braking.

### SUMMARY

According to an aspect of this disclosure, an automated transmission control apparatus includes a drive shaft to which a rotating torque of an engine is transmitted, an automated transmission including an input shaft, an output shaft arranged in parallel with the input shaft and rotatably connected to a driving wheel, a plurality of idler gears idly rotatably arranged at one of the input shaft and the output shaft, a plurality of fixed gears fixed to the other of the input shaft and the output shaft to be non-rotatable relative thereto, and being engageable with the plurality of idler gears, respectively, at least one sleeve provided at the one of the input shaft and the output shaft at which the plurality of idler gears are provided, to be non-rotatable relative to the shaft and to be movable in an axial direction of the shaft, the sleeve being arranged laterally relative to the plurality of idler gears, engaged teeth provided at the idler gears to protrude towards the sleeve for selectively engaging with engaging teeth provided at the sleeve in response to an axial movement of the sleeve, a shift actuator moving the sleeve in the axial direction for engaging the engaging teeth of the sleeve with the engaged teeth of the corresponding idler gear in a manner that the sleeve is non-rotatable relative to the corresponding idler gear, and for disengaging the sleeve from the corresponding idler gear and moving the sleeve to a neutral position at which the sleeve is rotatable relative to the corresponding idler gear, the transmission corresponding to a dog-clutch type transmission, a clutch arranged between the drive shaft and the input shaft for selectively connecting the drive shaft and the input shaft, a clutch actuator driving the clutch, an accelerated/decelerated travelling determination portion determining a decelerated travelling state caused by a brake of a vehicle and an accelerated traveling state caused by an accelerator of the vehicle, a gear stage determination portion determining a gear stage to be changed to, on the basis of at least one down-shift curve pre-set based on a throttle valve opening degree and a vehicle speed, on the basis of a travelling state of the vehicle, and a shift operation control portion controlling the clutch actuator to disconnect the clutch in a case where the accelerated/decelerated travelling determination portion determines that the decelerated travelling state of the vehicle corresponds to a sudden braking state on the basis of a brake operation state, the shift operation control portion controlling the shift actuator to move the sleeve, out of the plurality of sleeves, which is in an engagement state with the idler gear to the neutral position in a case where the gear stage determination portion determines that the down-shift curve is crossed, the shift operation control portion maintaining all the sleeves in a stand-by state at the neutral position while the accelerated/decelerated travelling determination portion maintains the determination that the vehicle is in the sudden braking state even in a case where the gear stage determination portion determines that the further down-shift curve is crossed.

According to the above-described configuration, in a case where the accelerated/decelerated travelling determination portion determines the sudden braking state, the clutch is disconnected and the sleeve which is in the engagement state at the time when a most proximate down-shift curve is crossed is moved to the neutral position and is maintained at the neutral position as is. Accordingly, in contrast with a case where only the disengagement of the clutch is conducted, the sleeve is maintained at the neutral position in the stand-by state, and thus the automated transmission control apparatus is prepared for a shifting to a next gear stage. As a result, a shifting movement is performed rapidly and quickly.

According to the above-described configuration, even in a case where the gear stage determination portion determines that the further down-shift curve is crossed, the shift operation control portion does not perform a preparatory operation and makes all the sleeves to wait at the neutral positions. Consequently, an extra shifting movement is restrained from being performed, and electric power for driving the actuator may be reduced.

According to another aspect of this disclosure, the shift operation control portion moves the sleeve, out of the plurality of sleeves, which corresponds to the idler gear configuring a first gear stage, from the neutral position to engage with the idler gear configuring the first gear stage in a case where the gear stage determination portion determines that the down-shift curve is crossed from a second speed to a first speed.

According to the above-described configuration, in a case where the gear stage determination portion determines that the down-shift curve from the second speed to the first speed is crossed, it is confirmed that the next gear stage which is to be changed to is the first stage because no other gear stage exists below the first speed. Thus, gear stage determination portion moves the sleeve from the neutral position to engage with the idler gear configuring the first speed, thereby performing a quick shifting movement.

According to a further aspect of this disclosure, the shift operation control portion controls the sleeve corresponding to the idler gear configuring the gear stage determined by the gear stage determination portion to engage with the idler gear configuring the gear stage determined by the gear stage determination portion in a case where the accelerated/decelerated travelling determination portion determines that the brake is released and the accelerator is pressed, and an acceleration request is made in a state where all the sleeves are in the stand-by state at the neutral positions.

According to the above-described configuration, even in a case where the gear stage determination portion determines that the down-shift curve is crossed, the shift operation control portion does not perform the preparatory operation, for example, the shift engagement operation, and makes all the sleeves to wait at the neutral positions. In a case where the accelerated/decelerated travelling determination portion determines that the brake is released and the accelerator is depressed to request acceleration, the shift operation control portion moves the sleeve from the neutral position so that the sleeve engages with the idler gear configuring the gear stage which is determined to be changed to. As described above, the preparation for the shifting is not performed each time when it is determined that the down-shift curve is passed, thus the extra shifting movement is restricted from being performed. In addition, because the sleeve is maintained at the neutral position and made to wait thereat, the shift change to the requested gear stage is performed quickly and rapidly at a time when the driver releases the brake and depresses the accelerator.

According to another aspect of this disclosure, the accelerated/decelerated travelling determination portion determines the sudden braking state on the basis of a brake sensor detecting a depressing state of the brake pedal, and the accelerated/decelerated travelling determination portion determines the sudden braking state in any case where a threshold value of a brake stroke at the brake operation is detected for a predetermined time period or longer, a case where a depressing speed of the brake pedal exceeds a predetermined threshold value, or where a temporal change amount of deceleration of the vehicle exceeds a predetermined threshold value.

According to a further aspect of this disclosure, the accelerated/decelerated travelling determination portion maintains the determination of the sudden braking state until the brake stroke decreases to a predetermined value or lower, or until the depressing of the brake pedal is released.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an explanation diagram illustrating a vehicle on which an automated transmission control apparatus according to embodiments disclosed here is mounted;
Fig. 2 is a flowchart of a shift control executed at the automated transmission control apparatus;
Fig. 3 is a flowchart of a shift engagement processing of the shift control;
Fig. 4 is a time chart from when a sudden braking operation is performed at a third gear stage to when the shift is changed to a first gear stage according to the embodiments;
Fig. 5 is a map illustrating a relation between a stroke amount of a clutch actuator and a clutch torque amount according to the embodiments;
Fig. 6 is a down-shift diagram which is set on the basis of a throttle valve opening degree and a vehicle speed according to the embodiments; and
Fig. 7 is a time chart of a shift change when the sudden braking operation is performed at the third gear stage and then an accelerator pedal is depressed at a second gear stage.

### DETAILED DESCRIPTION

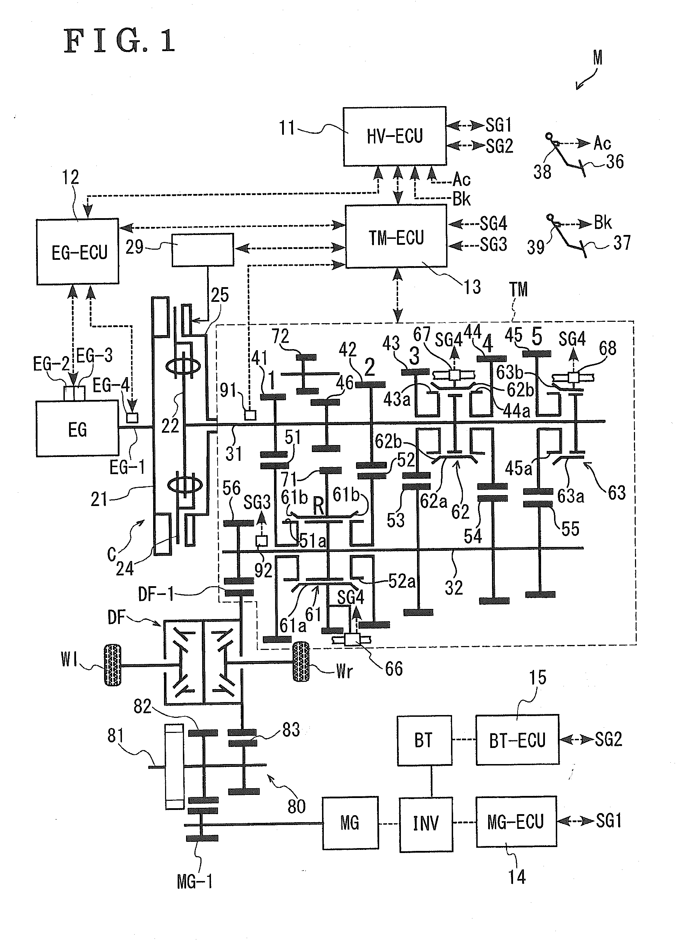

A first embodiment will be explained with reference to the drawings. In the first embodiment, an automated transmission including an automated transmission control apparatus according to the first embodiment is applied to a hybrid vehicle (which will be hereinafter referred to as a vehicle M). Fig. 1 is a schematic diagram illustrating a configuration of the vehicle M. As illustrated in Fig. 1, the vehicle M includes an engine EG, a motor generator MG, a clutch C, a transmission TM (which will be hereinafter referred to as a TM), an inverter INV, a battery BT, a hybrid ECU 11 (indicated as HV-ECU), an engine ECU 12 (indicated as EG-ECU), a TM ECU 13, a motor generator ECU 14 (indicated as MG-ECU), a battery ECU 15 (indicated as BT-ECU), and a speed reducer 80. At the vehicle M, driving wheels Wl, Wr are driven by a rotating torque outputted by the engine EG and the motor generator MG.

The vehicle M includes an accelerator pedal 36 (i.e., an accelerator) and a brake pedal 37 (i.e., a brake). The accelerator pedal 36 operates to change an engine torque outputted by the engine EG. An acceleration sensor 38 for detecting an accelerator opening degree that corresponds to an operation amount of the accelerator pedal 36 is provided at the accelerator pedal 36. A brake sensor 39 for detecting an on/off state of the brake pedal 37 and an operation amount of the brake pedal 37 is provided at the brake pedal 37. The vehicle M is provided with a brake master cylinder which generates a fluid pressure that corresponds to the operation amount of the brake pedal 37 and a brake apparatus which generates a braking force at the wheel according to a master pressure generated by the brake master cylinder.

The engine EG generates rotating torque (drive power) by combustion of hydrocarbonaceous fuels, for example, gasoline or light oil. It is configured that the drive power of the engine EG is transmitted via the clutch C, the automated transmission TM and a differential mechanism DF to the driving wheels Wl, Wr. The engine EG includes a fuel injection device EG-2 and a throttle valve EG-3. The fuel injection device EG-2 and the throttle valve EG-3 are connected to the EG-ECU 12 to be communicable therewith, and are thus controlled by the engine ECU 12. In a vicinity of a drive shaft EG-1 which outputs the drive power of the engine EG, an engine rotational speed sensor EG-4 which detects a rotational speed of the drive shaft EG-1, that is, the rotational speed of the engine EG, is provided. The engine rotational speed sensor EG-4 is connected to the engine ECU 12 to be communicable therewith and outputs the detected number of rotations, that is, a rotational speed, of the engine to the engine ECU 12.

The engine ECU 12 calculates a requested engine torque, which corresponds to torque of the engine EG which is requested by a driver, in accordance with the accelerator opening degree of the acceleration sensor 38 which is based on the operation of the accelerator pedal 36 performed by the driver. On the basis of the requested engine torque, the engine ECU 12 adjusts an opening degree of the throttle valve EG-3 to adjust an amount of intake air, and adjusts an amount of fuel injection of the fuel injection device EG-2 to control an ignition apparatus.
The clutch C is provided between the drive shaft EG-1, and an input shaft 31 of the TM, and connects and disconnects the drive shaft EG-1 and the input shaft 31 to each other. The clutch C is configured to electronically control transmission torque between the drive shaft EG-1 and the input shaft 31. In this embodiment, the clutch C is a dry type single plate clutch which is normally closed, and includes a flywheel 21, a clutch disc 22, a pressure plate 24, and a diaphragm spring 25. The flywheel 21 includes a predetermined mass and is formed in a circular disc shape. The flywheel 21 is connected to the drive shaft EG-1 to integrally rotate therewith. The clutch disc 22 is formed in a circular disc shape and includes a frictional member provided at an outer edge portion of the clutch disc 22. The clutch disc 22 faces the flywheel 21 to be in contact with the flywheel 21 and be out of contact therefrom. The clutch disc 22 is connected to the input shaft 31 to rotate integrally therewith.

The diaphragm spring 25 is a so-called disc spring and a diaphragm is provided at the diaphragm spring 25 to be inclined in a thickness direction of the diaphragm spring 25. An outer edge of the diaphragm spring 25 faces the pressure plate 24 to be in contact therewith. The diaphragm spring 25 presses the clutch disc 22 against the flywheel 21 via the pressure plate 24. In this state, the frictional member of the clutch disc 22 is pushed or pressed by the flywheel 21 and the pressure plate 24, and the clutch disc 22 and the flywheel 21 rotate integrally with each other due to a friction force between the frictional member, and the flywheel 21 and the pressure plate 24. Thus, the drive shaft EG-1 and the input shaft 31 are connected to each other.

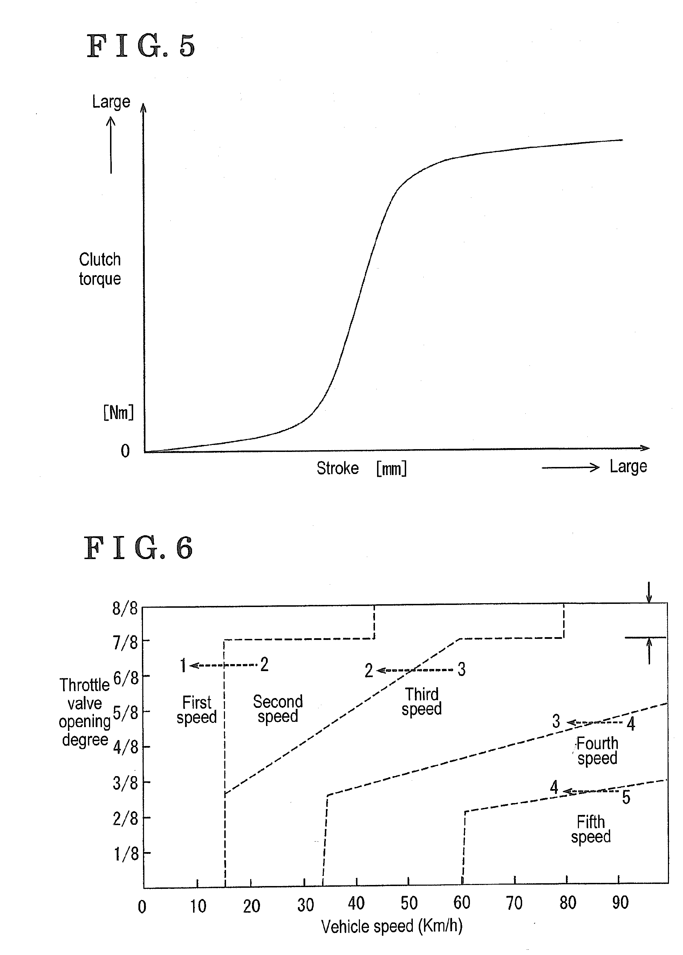

A clutch actuator 29 is controlled by the TM-ECU 13 to drive. The clutch actuator 29 presses or pushes an outer edge portion of the diaphragm 25 towards the flywheel 21 and releases the pressing, thereby varying the transmission torque of the clutch C. The clutch actuator 29 includes, for example, an electric clutch actuator and a hydraulic clutch actuator. In a case where the clutch actuator 29 presses the outer edge portion of the diaphragm 25 towards a direction opposite to the flywheel 21, the outer edge of the diaphragm 25 is deformed in a direction in which the outer edge is away from the flywheel 21. Then, a pressing force, with which the flywheel 21 and the pressure plate 24 press the clutch disc 22, is gradually decreased by the deformation of the diaphragm spring 25. Thus, the transmission torque between the clutch disc 22 and the flywheel 21 is gradually decreased, and the drive shaft EG-1 and the input shaft 31 come to be disconnected from each other. As described above, the TM-ECU 13 drives the clutch actuator 29 to thereby vary the transmission torque (clutch torque) between the clutch disc 22 and the flywheel 21 arbitrarily. Because a clutch torque map (see Fig. 6), on which a relation between a stroke amount of the clutch actuator 29 and a clutch torque amount is obtained, is preset, the clutch torque is derived from a stroke amount detected by a stroke sensor provided at the clutch actuator 29.

The TM is an automated transmission including a gear mechanism, and changes the rotating torque outputted from the engine EG at gear ratios of plural gear stages, and then outputs the torque to the differential mechanism DF. The TM of this embodiment is a dog-clutch type automated transmission which includes a first sleeve 61 a, a second sleeve 62a and a third sleeve 63a which will be described below, but the TM does not include a synchronization mechanism, for example, a synchronizer ring. The TM includes the input shaft 31, an output shaft 32, a first drive gear 41, a second drive gear 42, a third drive gear 43, a fourth drive gear 44, a fifth drive gear 45, a reverse drive gear 46, a first driven gear 51, a second driven gear 52, a third driven gear 53, a fourth driven gear 54, a fifth driven gear 55, an output gear 56, a first selection mechanism 61, a second selection mechanism 62, a third selection mechanism 63, a reverse driven gear 71, and a reverse idler gear 72. Each of the third drive gear 43, the fourth drive gear 44, the fifth drive gear 45, the first driven gear 51 and the second driven gear 52 serves as an idler gear. Each of the first drive gear 41, the second drive gear 42, the third driven gear 53, the fourth driven gear 54 and the fifth driven gear 55 serves as a fixed gear.

The rotating torque from the engine EG is inputted to the input shaft 31, and the input shaft 31 rotates integrally with the clutch disc 22 of the clutch C. The output shaft 32 is arranged in parallel with the input shaft 31. Each of the input shaft 31 and the output shaft 32 is rotatably supported at a housing of the TM.

Each of the first drive gear 41, the second drive gear 42, and the reverse drive gear 46 serves as the fixed gear, and is fixed to the input shaft 31 to be non-rotatable relative to the input shaft 31. Each of the third drive gear 43, the fourth drive gear 44, and the fifth drive gear 45 serves as the idler gear, and is provided at the input shaft 31 to be rotatable (to be idly rotatable) relative to the input shaft 31.

The first drive gear 41 and the first driven gear 51 mesh with each other to configure a first gear stage. The second drive gear 42 and the second driven gear 52 mesh with each other to configure a second gear stage. The third drive gear 43 and the third driven gear 53 mesh with each other to configure a third gear stage. The fourth drive gear 44 and the fourth driven gear 54 mesh with each other to configure a fourth gear stage. The fifth drive gear 45 and the fifth driven gear 55 mesh with each other to configure a fifth gear stage.

Gear diameters of the first drive gear 41, the second drive gear 42, the third drive gear 43, the fourth drive gear 44, and the fifth drive gear 45 are designed to be increased in the order described above. Gear diameters of the first driven gear 51, the second driven gear 52, the third driven gear 53, the fourth driven gear 54, and the fifth driven gear 55 are designed to be decreased in the order described above.

An input shaft rotational speed sensor 91 for detecting the rotational speed of the input shaft 31 is provided in a vicinity of the input shaft 31, or in a vicinity of the first drive gear 41 and the second drive gear 42. An output shaft rotational speed sensor 92 for detecting the rotational speed of the output shaft 32 is provided in a vicinity of the output shaft 32, or in a vicinity of the third driven gear 53, the fourth driven gear 54, and the fifth driven gear 55. Each of the input shaft rotational speed sensor 91 and the output shaft rotational speed sensor 92 is connected to the TM-ECU 13 to be communicable with the TM-ECU 13, and outputs a detection signal to the TM-ECU 13.

The reverse drive gear 46 is the reverse gear. In a case where the reverse drive gear 46 meshes with the reverse idler gear 72, the reverse drive gear 46 drives the reverse driven gear 71 via the reverse idler gear 72. The reverse drive gear 46 selectively meshes with the reverse idler gear 72.

The output shaft 32 of the TM outputs the rotating torque inputted to the TM to the differential mechanism DF in a case where the output shaft 32 meshes with a ring gear DF-1 of the differential mechanism DF.

The first selection mechanism 61 selects one of the first driven gear 51 and the second driven gear 52, and connects the selected one of the first driven gear 51 and the second driven gear 52 to the output shaft 32 in a manner that the selected one of the first driven gear 51 and the second driven gear 52 is non-rotatable relative to the output shaft 32. The first selection mechanism 61 includes the first sleeve 61 a and a first shift actuator 66 (i.e., a shift actuator) which actuates the first sleeve 61 a (i.e., a sleeve). The first selection mechanism 61 is arranged between the first driven gear 51 and the second driven gear 52. In other words, the first sleeve 61 a is arranged between the first driven gear 51 and the second driven gear 52, and is arranged laterally relative to the first driven gear 51 and relative to the second driven gear 52. The first sleeve 61 a is spline-fitted to the output shaft 32, and is provided at the output shaft 32 to be non-rotatable relative to the output shaft 32 and to be movable in an axial direction of the output shaft 32. Plural engaging teeth 61b are formed at both side surfaces of the first sleeve 61 a in a manner that a predetermined angle in a circumferential direction is provided between the adjacent engaging teeth 61 b. The engaging teeth 61 b engage with and disengage from engaged teeth 51 a formed at a surface of the first driven gear 51, and the surface at which the engaged teeth 51 a are formed faces the first sleeve 61 a. The engaging teeth 61 b engage with and disengage from engaged teeth 52a formed at a surface of the second driven gear 52, and the surface at which the engaged teeth 52a are formed faces the first sleeve 61 a.

The first shift actuator 66 is controlled by the TM-ECU 13 for actuation, and moves the first sleeve 61 a towards the first driven gear 51 or towards the second driven gear 52, and moves the first sleeve 61a to a first neutral position (i.e., a neutral position) located midway between the first driven gear 51 and the second driven gear 52. In a case where the first shift actuator 66 moves the first sleeve 61 a towards the first driven gear 51, the engaging teeth 61 b of the first sleeve 61 a engage with the engaged teeth 51 a of the first driven gear 51, and thus the first driven gear 51 is connected via the first sleeve 61 a to the output shaft 32 to be non-rotatable relative to the output shaft 32. Thus, the first gear stage is configured or established. In a case where the first shift actuator 66 moves the first sleeve 61 a towards the second driven gear 52, the engaging teeth 61 b of the first sleeve 61 a engage with the engaged teeth 52a of the second driven gear 52, and thus the second driven gear 52 is connected via the first sleeve 61 a to the output shaft 32 to be non-rotatable relative to the output shaft 32. Thus, the second gear stage is configured. In a case where the first shift actuator 66 moves the first sleeve 61 a to the first neutral position, each of the first driven gear 51 and the second driven gear 52 comes to be in a neutral state where each of the first driven gear 51 and the second driven gear 52 is rotatable relative to the output shaft 32.

The second selection mechanism 62 selects one of the third drive gear 43 and the fourth drive gear 44, and connects the selected one of the third drive gear 43 and the fourth drive gear 44 to the input shaft 31 in a manner that the selected one of the third drive gear 43 and the fourth drive gear 44 is non-rotatable relative to the input shaft 31. The second selection mechanism 62 includes the second sleeve 62a (i.e., the sleeve) and a second shift actuator 67 (i.e., the shift actuator) which actuates the second sleeve 62a. The second selection mechanism 62 is arranged between the third drive gear 43 and the fourth drive gear 44. In other words, the second sleeve 62a is arranged between the third drive gear 43 and the fourth drive gear 44, and is arranged laterally relative to the third drive gear 43 and the fourth drive gear 44. The second sleeve 62a is spline-fitted to the input shaft 31, and is provided at the input shaft 31 to be non-rotatable relative thereto and to be movable in an axial direction of the input shaft 31. Plural engaging teeth 62b are formed at both side surfaces of the second sleeve 62a in a manner that a predetermined angle in a circumferential direction is provided between the adjacent engaging teeth 62b. The engaging teeth 62b engage with and disengage from engaged teeth 43a formed at a surface of the third drive gear 43, and the surface at which the engaged teeth 43a are formed faces the second sleeve 62a. The engaging teeth 62b engage with and disengage from engaged teeth 44a formed at a surface of the fourth drive gear 44, and the surface at which the engaged teeth 44a are formed faces the second sleeve 62a.

The second shift actuator 67 is controlled by the TM-ECU 13 for actuation, and moves the second sleeve 62a towards the third drive gear 43 or towards the fourth drive gear 44, and moves the second sleeve 62a to a second neutral position (i.e., the neutral position) located midway between the third drive gear 43 and the fourth drive gear 44. In a case where the second shift actuator 67 moves the second sleeve 62a towards the third drive gear 43, the engaging teeth 62b of the second sleeve 62a engage with the engaged teeth 43a of the third drive gear 43, and thus the third drive gear 43 is connected via the second sleeve 62a to the input shaft 31 to be non-rotatable relative to the input shaft 31. Thus, the third gear stage is configured.

In a case where the second shift actuator 67 moves the second sleeve 62a towards the fourth drive gear 44, the engaging teeth 62b of the second sleeve 62a engage with the engaged teeth 44a of the fourth drive gear 44, and thus the fourth drive gear 44 is connected via the second sleeve 62a to the input shaft 31 to be non-rotatable relative to the input shaft 31. Thus, the fourth gear stage is configured.

In a case where the second shift actuator 67 moves the second sleeve 62a to the second neutral position, each of the third drive gear 43 and the fourth drive gear 44 comes to be in the neutral state where each of the third drive gear 43 and the fourth drive gear 44 is rotatable relative to the input shaft 31.

The third selection mechanism 63 includes the third sleeve 63a (i.e., the sleeve) and a third shift actuator 68 (i.e., the shift actuator) which actuates the third sleeve 63a. The third selection mechanism 63 is arranged laterally relative to the fifth drive gear 45. In other words, the third sleeve 63a is arranged laterally relative to the fifth drive gear 45. The third sleeve 63a is spline-fitted to the input shaft 31, and is provided at the input shaft 31 to be non-rotatable relative thereto and to be movable in the axial direction of the input shaft 31. Plural engaging teeth 63b are formed at a side surface, which faces the fifth drive gear 45, of the third sleeve 63a in a manner that a predetermined angle in a circumferential direction is provided between the adjacent engaging teeth 63b. The engaging teeth 63b engage with and disengage from engaged teeth 45a formed at a surface of the fifth drive gear 45, and the surface at which the engaged teeth 45a are formed faces the third sleeve 63a.

The third shift actuator 68 is controlled by the TM-ECU 13 for actuation, and moves the third sleeve 63a towards the fifth drive gear 45, and moves the third sleeve 63a to a third neutral position (i.e., the neutral position) that is away from the fifth drive gear 45. In a case where the third shift actuator 68 moves the third sleeve 63a towards the fifth drive gear 45, the engaging teeth 63b of the third sleeve 63a engage with the engaged teeth 45a of the fifth drive gear 45, and thus the fifth drive gear 45 is connected via the third sleeve 63a to the input shaft 31 to be non-rotatable relative to the input shaft 31. Thus, the fifth gear stage is configured. In a case where the third shift actuator 68 moves the third sleeve 63a to the third neutral position, the fifth drive gear 45 comes to be in the neutral state where the fifth drive gear 45 is rotatable relative to the input shaft 31. In this embodiment, the shift actuator includes the three shift actuators, that is, the first to third shift actuators 66 to 68, however, a configuration of the shift actuator is not limited thereto. The first to third actuators 66 to 68 may be integrated on two axes (for example, the two axes may correspond to a shift direction moving between the first gear stage and the second gear stage, between the third gear stage and the fourth gear stage, between the fifth gear stage and the reverse stage, and a select direction that is orthogonal to the shift direction) so that the first to third sleeve 61a to 63a may be moved together with one another by a drive mechanism or by two drive mechanisms.

The reverse idler gear 72 is rotatably supported at the housing to be movable in an axial direction. In a case where the vehicle M moves backwards, the reverse idler gear 72 meshes with both the reverse drive gear 46 and the reverse driven gear 71. In the other cases than a case where the vehicle M moves backwards, the reverse idler gear 72 meshes with neither of the reverse drive gear 46 nor the reverse driven gear 71. The reverse idler gear 72 is moved by a reverse actuator in the axial direction. The reverse actuator is controlled by the TM-ECU 13 to actuate.

The differential mechanism DF transmits the rotating torque that is inputted from at least one of the output shaft 32 of the TM and the motor generator MG to the driving wheels Wl, Wr in a manner that the driving wheels Wl, Wr may rotate at different speeds from each other. The differential mechanism DF includes the ring gear DF-1 which meshes with the output gear 56 and with a drive gear 83. With the above-described configuration, the output shaft 32 is rotatably connected to the driving wheels Wl, Wr.

The speed reducer 80 reduces the rotating torque of the motor generator MG to output the reduced torque to the differential mechanism DF. The speed reducer 80 includes a rotary shaft 81, a driven gear 82, and the drive gear 83. The driven gear 82 and the drive gear 83 are attached to the rotary shaft 81. The rotary shaft 81 is rotatably supported at a housing. The driven gear 82 meshes with a drive gear MG-1 that is rotated by the motor generator MG. A gear diameter of the driven gear 82 is greater than a gear diameter of the drive gear 83. The drive gear 83 meshes with the ring gear DF-1 of the differential mechanism DF.

The motor generator MG operates as a motor for supplying the rotating torque to the driving wheels Wl, Wr and, in addition, operates as a power generator converting a motional energy of the vehicle M into electric power. The motor generator MG is constituted by a stator fixed to a case and by a rotor rotatably provided at an inner peripheral side of the stator.

The inverter INV is electrically connected to the stator of the motor generator MG and to the battery BT. The inverter INV is connected to the motor generator ECU 14 to be communicable therewith. In accordance with a control signal from the motor generator ECU 14, the inverter INV boosts a direct current supplied from the battery BT and converts the direct current into an alternating current, thereafter the inverter INV supplies the alternating current to the stator. Accordingly, the rotating torque is generated at the motor generator MG and thus the motor generator MG functions as the motor. In addition, in accordance with a control signal from the motor generator ECU 14, the inverter INV allows the motor generator MG to function as the power generator. The inverter INV converts the alternating current generated at the motor generator MG into a direct current and reduces voltage to charge the battery BT.

The battery BT is a secondary battery that is chargeable. The battery BT is connected to the inverter INV. The battery BT is connected to the battery ECU 15 so as to be communicable therewith.

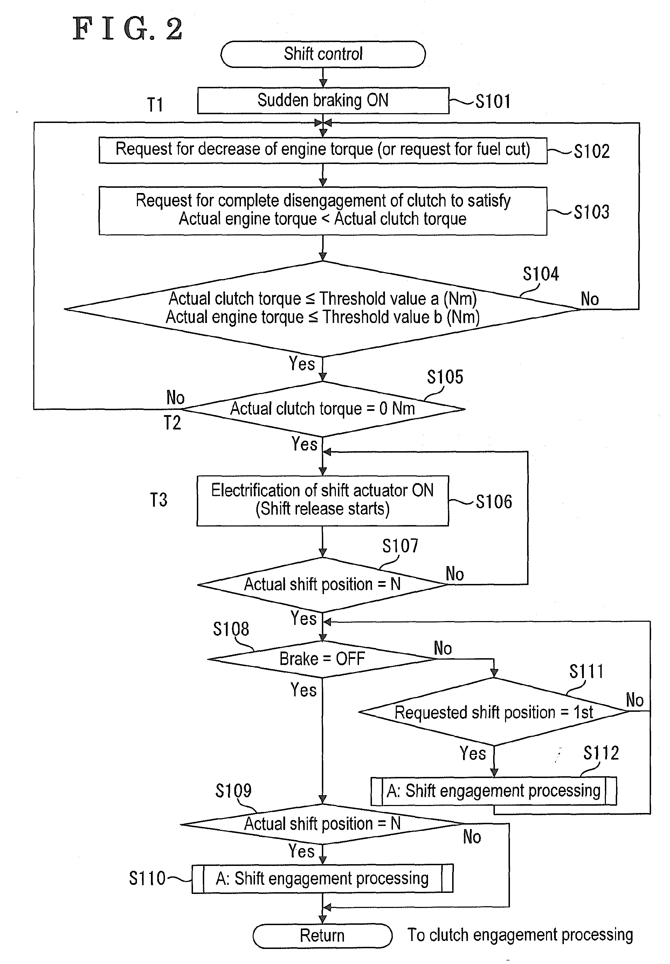

The engine ECU 12 is an electronic control unit which controls the engine EG. The TM-ECU 13 is an electronic control unit which controls the TM. The TM-ECU 13 is provided with a memory portion, for example, an input/output interface, a CPU, a RAM, a ROM, and a non-volatile memory, which are connected via buses to one another. The CPU executes programs corresponding to a flow chart illustrated in Fig. 2. The RAM temporarily stores variables that are necessary for the execution of the programs. The memory portion stores, or memorizes, the programs.

The motor generator ECU 14 is an electronic control unit which controls the inverter INV. The battery ECU 15 is an electronic control unit which manages states of the battery BT, for example, charged and discharged states and temperature states of the battery BT. The hybrid ECU 11 is a higher-level electronic control unit or a host electronic control unit which performs an integrated control on moving or travelling of the vehicle M. The hybrid ECU 11, the engine ECU 12, the TM-ECU 13, the motor generator ECU 14, and the battery ECU 15 are communicable with one another via a controller area network (CAN).

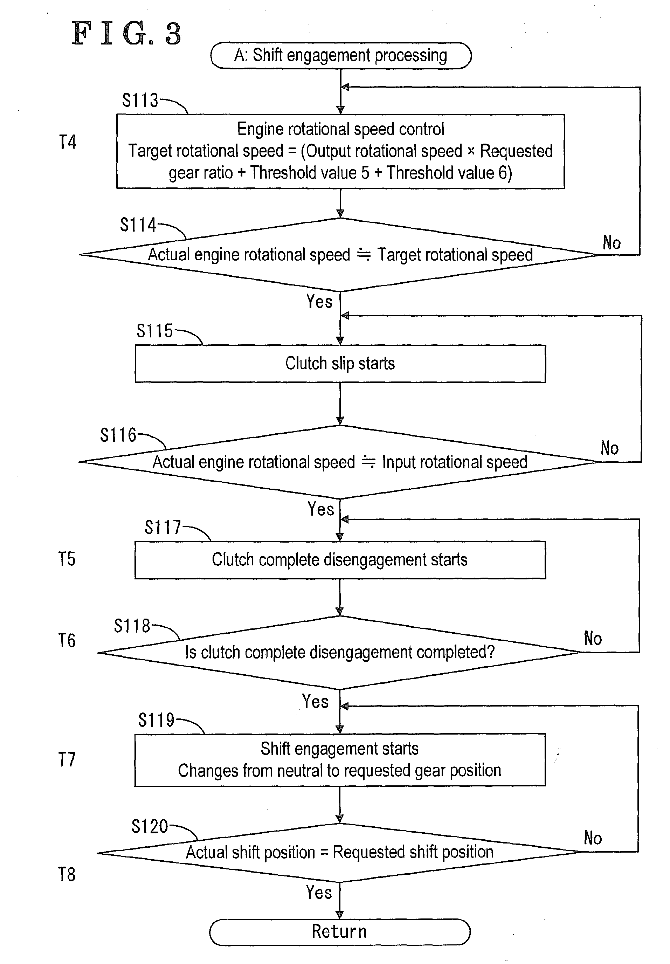

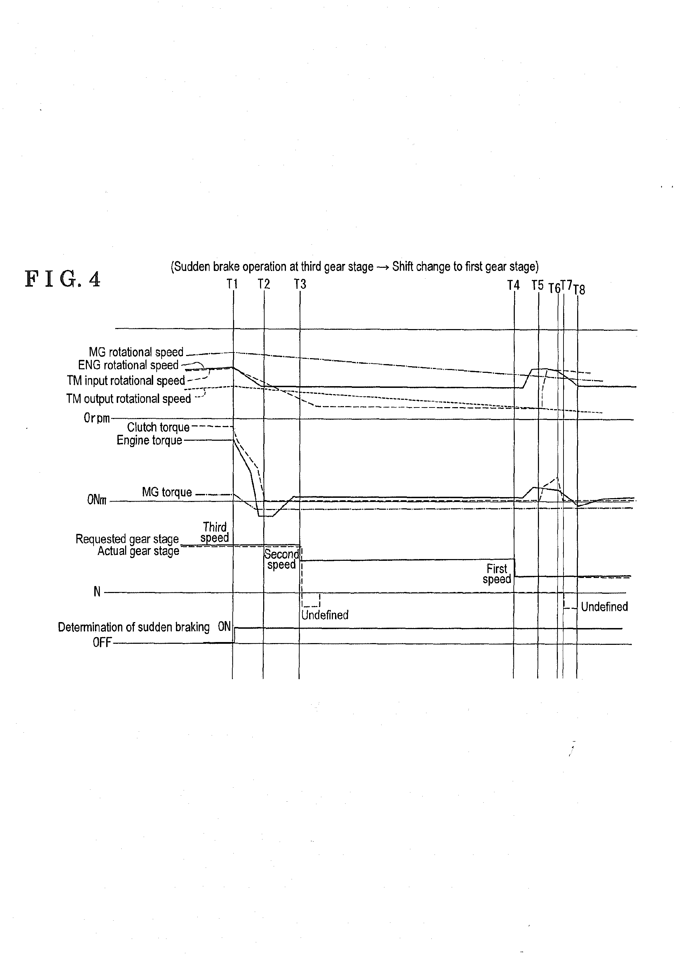

Next, a shift processing, that is, a shift control, executed by the automated transmission control apparatus (the hybrid ECU 11, the engine ECU 12, the TM-ECU 13) according to the embodiment will be described with the reference to the flowcharts in Figs. 2 and 3 and the time chart of Fig. 4. In a state where the vehicle M is travelling at, for example, the third speed, when the depressing, that is, the operation of the brake pedal 37 which is performed by the driver is detected and the detected operation of the brake pedal 37 is determined by the hybrid ECU 11 as the sudden braking (Step 101 which will be hereinafter referred to as S101), a control of the automated transmission according to this embodiment is started. For example, in a case where the brake sensor 39 detects a threshold value 1 of a brake stroke for a time period threshold value 2 (i.e., a predetermined time period) or longer, the braking is determined as the sudden braking in a decelerated travelling state (a sudden braking state). The brake stroke indicates a brake operation state. The threshold value 1 and the time period threshold value 2 are set in advance on the basis of, for example, simulation data. In addition, once the sudden braking state is determined, the determination of the sudden braking state remains or continues until the sudden braking state is released (for example, until the brake stroke decreases to be a predetermined value or lower, or until the depressing of the brake pedal is turned off, that is, the depressing of the brake pedal is released). The hybrid ECU 11 constitutes an accelerated/decelerated travelling determination portion.

The engine ECU 12 requests the engine torque to be lowered or reduced (S102, T1). An instruction to cut a fuel supply to the engine may be issued. As a result of the request or the instruction which are described above, the engine rotational speed declines and also the engine torque declines (T1 to T2 in Fig. 4).

The TM-ECU 13 request the clutch C to be completely disengaged (S103). At this time, the clutch torque decreases, however, states of decremental changes in an actual engine torque and an actual clutch torque are controlled so that the actual engine torque does not increase to be greater than the actual clutch torque. Thus, the clutch torque is reduced while a state where the clutch C does not slip is maintained. The engine torque is derived from an engine performance curve indicating a relation between the engine rotational speed and the engine torque, on the basis of a detection value detected by the engine rotational speed sensor EG-4.

In a case where the TM-ECU 13 determines that the actual clutch torque is equal to or less than a threshold value a, which is set in advance, and the engine ECU 12 determines that the actual engine torque is equal to or less than a threshold value b, which is set in advance, the processing proceeds to Step 105 (S104). In a case where either the actual engine torque or the actual clutch torque is not equal to or less than the threshold value which is set, the processing moves back to Step 102, and the reduction in the engine torque (S102) and the complete disengagement of the clutch (S103) are requested.

Next, the TM-ECU 13 determines whether or not the actual clutch torque is in a zero state (S105). Because the actual clutch torque being in the zero state means that the clutch C is in a completely-disengaged state (T2 in Fig. 4), the processing proceeds to Step 106. In a case where the actual clutch torque is not zero, the processing moves back to S102, and the request for the reduction in the engine torque and the request for the complete disengagement of the clutch (S103) are repeated.

Because the clutch C is brought to be completely disengaged, a shift release may be operated. The second shift actuator 67 is electrified or energized for starting the shift release operation by which the engagement between the second sleeve 62a and the third drive gear 43 is released, and thus the second sleeve 62a is brought to the neutral position (S106, T3 in Fig. 4).

Next, the TM-ECU 13 determines whether or not an actual shift position is positioned at the neutral position (S107). In a case it is determined that the actual shift position is at the neutral position, the processing proceeds to Step 108.

In this case, a torque loss occurs because the torque is not applied from the engine to the driving wheels Wl, Wr when the clutch C is in the completely-disengaged state, and thus deterioration of drivability conventionally occurs. According to this embodiment, however, the torque loss is prevented from occurring by providing a deceleration energy that corresponds to a torque requested by a driver (a negative torque), with the assistance of regeneration by the motor generator MG.

Next, it is determined whether or not the braking is released (S108). In a case where it is determined that the braking is released, the processing proceeds to Step 109.

Next, the TM-ECU 13 determines whether or not the actual shift position is the neutral position (S109). In a case where it is determined that the actual shift position is the neutral position, the processing proceeds to Step 110. The TM-ECU 13 constitutes a gear stage determination portion.

In a case where the braking is not released at Step 108, the processing proceeds to Step 111. At Step 111, the TM-ECU 13 determines whether or not the requested shift position is the first speed. Even in a case where a down-shift curve (see a down-shift diagram in Fig. 6) at the border between the second speed and the first speed is not crossed yet, the requested shift position is estimated on the basis of, for example, a tendency of the decrement in a vehicle speed which is associated with the braking. The down-shift curve is set in advance on the basis of a throttle valve opening degree and the vehicle speed. In a case where it is determined that the requested shift position is the first speed, the processing proceeds to Step 112. The TM-ECU 13 constitutes a shift operation control portion.

Next, the TM-ECU 13 energizes the first shift actuator 66 to start a shift engagement processing by which the first sleeve 61a is engaged with the first driven gear 51 (S110, S112).

By synchronizing the engine rotational speed with a rotational speed which corresponds to the rotational speed of the input shaft 31 of the TM, the shift engagement processing comes to be enabled. The rotational speed which corresponds to the rotational speed of the input shaft 31 is obtained by multiplying the output shaft 32 of the TM by a gear ratio of the requested gear. Accordingly, an engine rotational speed control is performed (S113, T4 in Fig. 4). In this case, for example, a target engine rotational speed is derived as follows: a threshold value 5 and a threshold value 6 are added to a product obtained by multiplying the output shaft 32, which is driven by the driving wheels Wl, Wr, by a requested gear ratio of the first speed. The threshold value 5 is derived from deceleration of the output shaft rotational speed on the basis of a travel resistance of the vehicle M. The threshold value 6 is a compatible value which is decided on the basis of a rotational deviation between the target rotational speed and the input shaft rotational speed (because the rotation decreases slightly by an amount of inertia of the input shaft 31 and the clutch C when matching the rotational speeds by allowing the clutch to slip).

The engine ECU 12 determines, with the engine rotational speed sensor EG-4, whether or not the actual engine rotational speed reaches the target rotational speed (S114). In a case where it is determined that the actual engine rotational speed reaches the target rotational speed, the processing proceeds to Step 115.

The TM-ECU 13 drives the clutch actuator 29 so that the pressure plate is pressed against the flywheel by the clutch disc 22. Thus, a half-engaged state of the clutch is established and the clutch is started to slip (S115, T5 in Fig. 4). By allowing the clutch to slip, the actual engine rotational speed is brought to match the input shaft rotational speed.

In this case, for example, the TM-ECU 13 sets a threshold value A (for example, 30 Nm) as a torque that is capable of sufficiently transmitting the engine rotational speed (engine torque) to the input shaft 31. The TM-ECU 13 controls the actual clutch torque to be equal to or less than the threshold value A. The actual clutch torque is derived from, for example, the clutch torque map (see Fig. 5) indicating the relation between the clutch torque amount and the stroke amount of the clutch actuator. The above-described control is performed for controlling the clutch torque as an operation amount in order to keep the rotational speeds synchronized and to perform a feedback control. In a case where the actual clutch torque is equal to or less than the threshold value A, the operation amount is controlled under, for example, a PI control so that a difference between the engine rotational speed and the input shaft rotational speed remains equal to or less than a threshold value B (for example, 50 rpm).

In a case where it is determined that the actual engine rotational speed matches the input shaft rotational speed (Step 116), the processing proceeds to Step 117.

The TM-ECU 13 drives the clutch actuator 29 to start the complete disengagement of the clutch C. The processing proceeds to Step 118 (T6 in Fig. 4).

The TM-ECU 13 determines whether or not the clutch C is completely disengaged on the basis of a stroke position of the clutch actuator 29 (S118). In a case where it is determined that the clutch C is completely disengaged, the first sleeve 61 a is brought in engagement with the first driven gear 51, and thus the first sleeve 61 a is moved from the neutral position to the gear position of the first speed which is requested (S119, T7 in Fig. 4).

Next, the TM-ECU 13 determines whether or not the actual shift position matches the requested shift position (S120). In a case where it is determined that the actual shift position matches the requested shift position, the shift control ends (T8 in Fig. 4). In a case where it is determined that the actual shift position does not match the requested shift position, the processing moves back to S119 and the first sleeve 61 a is moved from the neutral position to the gear position of the first speed.

As is clear from the above explanation, according to the automated transmission control apparatus of this embodiment, in a case where the hybrid ECU 11 determines the sudden braking state, the TM-ECU 13 disengages the clutch C and moves the second sleeve 62a, which has been in the engaged state, to the neutral position. Accordingly, in contrast with a case where only the disengagement of the clutch C is conducted, all the sleeves 61 a, 62a, 63a are maintained at the neutral positions in a stand-by state, and thus the automated transmission control apparatus is prepared for the shifting to a next gear stage. As a result, the shifting movement is performed rapidly and quickly.

In addition, even in a case where the TM-ECU 13 determines that the down-shift curve is crossed, the TM-ECU 13 keeps the sleeves 61 a, 62a, 63a at the neutral positions in the stand-by state, without preparing for the shifting, that is, without performing the preparatory operation for the shifting. As a result, an extra shifting movement is restrained from being performed, and electric power for driving the actuator may be reduced.

In addition, in a case where the TM-ECU 13 determines that the down-shift curve from the second speed to the first speed is crossed, it is confirmed that the next gear stage which is to be changed to is the first stage because no other gear stage exists below the first speed. Thus, the TM-ECU 13 controls the first sleeve 61 a to be moved from the neutral position to engage with the first driven gear 51 configuring the first speed, thereby performing the quick shifting movement.

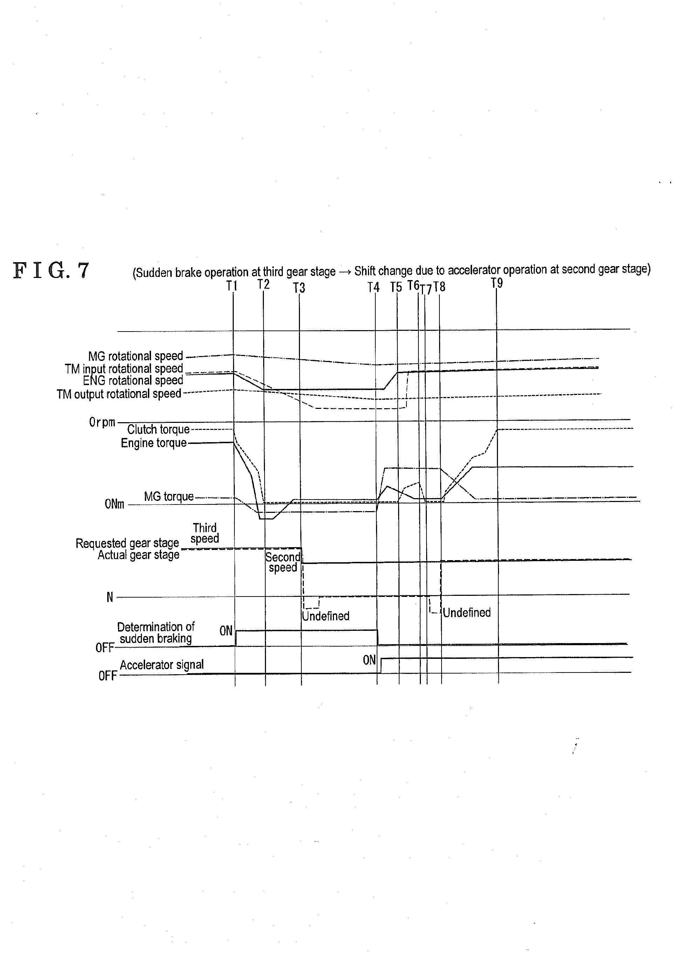

A second embodiment will be explained with reference to Fig. 7. In the second embodiment, the automated transmission including an automated transmission control apparatus according to the second embodiment is applied to the hybrid vehicle (which will be hereinafter referred to as the vehicle M).

Configurations of the vehicle and the automated transmission control apparatus of the second embodiment are similar to those of the first embodiment. Accordingly, the same reference numerals are given to the same or corresponding component parts, and the description thereof is omitted.

In this embodiment, a shift control is described for a case where the brake pedal 37 is depressed suddenly (the sudden braking), and thereafter the accelerator pedal 36 is depressed immediately for acceleration because of, for example, a so-called change-mind shifting at which the driver changes his or her intention during the shifting.

As illustrated in the time chart in Fig. 7, the processing executed between T1 to T3 is similar to that of the first embodiment, and thus the explanation thereof will be omitted.

First, the hybrid ECU 11 determines whether or not the sudden braking is released on the basis of the brake sensor 39 (T4 in Fig. 7). Thereafter, the hybrid ECU 11 determines whether or not the accelerator pedal 36 is depressed on the basis of the acceleration sensor 38. In a case where accelerator pedal 36 is depressed, the throttle opening degree increases, and the engine torque and the engine rotational speed increase (an accelerated traveling state). Because the clutch C is in the disengaged state, the engine torque is not transmitted to the input shaft 31. Even in a case where the TM-ECU 13 detects that the down-shift curve at the border between the third speed and the second speed is crossed, the second sleeve 62a is positioned at the neutral position in the stand-by state. While the clutch C is in the disengaged state, an MG torque of the motor generator MG is increased, and thereby performing assistance by supplying the torque to the driving wheels Wl, Wr. As a result, the deterioration of drivability due to the torque loss is prevented from occurring (T4 to T5 in Fig. 7).

In a case where the engine ECU 12 determines that the engine rotational speed reaches a predetermined value, the TM-ECU 13 drives the clutch actuator 29 so that the clutch slip (the half-engaged clutch) is performed (T5 in Fig. 7). Then, the rotational speed of the input shaft 31 (the rotational speed corresponding to the rotational speed of the input shaft, which is derived by multiplying the output shaft 32 by the gear ratio of the gear stage) is brought to match the engine rotational speed (T5 to T6 in Fig. 7). Because the first sleeve 61 a configuring the next gear stage is at the neutral position, the input shaft 31, the second drive gear 42 and the second driven gear 52 are driven by the engine torque to rotate when the clutch C is engaged. As a result, the engine torque is transmitted due to the clutch slip which allows the clutch C in the disengaged state to engage and due to the increase in the engine rotational speed. In addition, the rotational speed of the input shaft 31, the second drive gear 42 and the second driven gear 52 is controlled to match with the rotational speed of the output shaft 32, which rotates in association with the driving wheels Wl, Wr, and the first sleeve 61 a, within a certain range. As described above, because the first sleeve 61 a is on stand-by at the neutral position, the matching of the rotational speeds is performed readily and quickly, which is performed for engaging the engaging teeth 61 b of the first sleeve 61 a with the engaged teeth 52a of the second driven gear 52.

When the state in which the rotational speed of the input shaft 31 matches the engine rotational speed (the state in which the rotational speed of the input shaft 31 is controlled to be a predetermined rotational speed) continues for a predetermined period of time, the TM-ECU 13 drives the clutch actuator 29 to start the disengagement of the clutch C (T6 in Fig. 7).

At a time of completion of the disengagement of the clutch C, the TM-ECU 13 drives the first shift actuator 66 to start moving the first sleeve 61 a from the neutral position towards the second driven gear 52 (T7 in Fig. 7).

The first sleeve 61 a is brought in engagement with the second driven gear 52 (T8 in Fig. 7). The engagement of the clutch C is started and the engine torque is increased. As the increase of the engine torque, the MG torque, which is used for the assistance, is reduced.

When the clutch C comes to be completely engaged, the shift control ends (T9 in Fig. 7).

As is clear from the above explanation, according to the automated transmission control apparatus of this embodiment, even in a case where the TM-ECU 13 determines that the down-shift curve is crossed, the TM-ECU 13 maintains all the sleeves (the first sleeve 61 a, the second sleeve 62a and the third sleeve 63a) on standby at the neutral positions without performing the preparatory operation for the shifting, for example, the shift engagement operation. In a case where the hybrid ECU 11 determines that the brake pedal 37 is released and the accelerator pedal 36 is depressed to request acceleration, the TM-ECU 13 controls the first sleeve 61 a to move from the neutral position and to engage with the second driven gear 52 configuring the gear stage (the second speed) which is determined as the gear stage to be changed to. As described above, the preparation for the shifting is not performed each time when it is determined that the down-shift curve is crossed, thereby restraining the extra shifting movement to be performed. In addition, the first sleeve 61a is maintained at the neutral position in the stand-by state. As a result, the shift change to the requested gear stage is performed quickly and rapidly at a time when the driver releases the brake pedal 37 and depresses the accelerator pedal 36.

In the above-described embodiments, the motor generator MG is connected via the speed reducer to an input shaft of the differential mechanism DF, at an opposite side to the output shaft of the TM. However, for example, the motor generator MG may engage with the output shaft of the TM via a reduction gear. In addition, the vehicle of the above-described embodiments includes the hybrid system, however, the vehicle does not have to include the motor generator for driving the driving wheels, for example. In addition, according to the above-described embodiments, in a case where the brake sensor 39 detects the threshold value 1 of the brake stroke, which indicates the braking operation state, for the time period threshold value 2 or longer, it is determined that the sudden braking state is established. However, the determination on the sudden braking state is not limited thereto. For example, the sudden braking state may be determined in a case where a brake pedal depressing speed exceeds a predetermined threshold value. The determination on the sudden braking state may be made in a case where a temporal change amount of the vehicle deceleration exceeds a predetermined threshold value, which may be used in combination with another method for the determination. Further, the sudden braking state may be determined in a case where a rate of change of a hydraulic pressure value of brake fluid, which is based on the operation of the brake pedal, exceeds a predetermine threshold value.

This disclosure is not limited to the embodiments which are described above and illustrated in the drawings, and may be appropriately changed or modified without departing from the scope of the disclosure.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An automated transmission control apparatus comprising:
a drive shaft (EG-1) to which a rotating torque of an engine (EG) is transmitted;
an automated transmission (TM) including an input shaft (31), an output shaft (32) arranged in parallel with the input shaft (31) and rotatably connected to a driving wheel (Wl, Wr), a plurality of idler gears (43, 44, 45, 51, 52) idly rotatably arranged at one of the input shaft (31) and the output shaft (32), a plurality of fixed gears (41, 42, 53, 54, 55) fixed to the other of the input shaft (31) and the output shaft (32) to be non-rotatable relative thereto, and being engageable with the plurality of idler gears (43, 44, 45, 51, 52), respectively, at least one sleeve (61a, 62a, 63a) provided at the one of the input shaft (31) and the output shaft (32) at which the plurality of idler gears (43, 44, 45, 51, 52) are provided, to be non-rotatable relative to the shaft (31, 32) and to be movable in an axial direction of the shaft (31, 32), the sleeve (61 a, 62a, 63a) being arranged laterally relative to the plurality of idler gears (43, 44, 45, 51, 52), engaged teeth (43a, 44a, 45a, 51 a, 52a) provided at the idler gears (43, 44, 45, 51, 52) to protrude towards the sleeve (61 a, 62a, 63a) for selectively engaging with engaging teeth (61 b, 62b, 63b) provided at the sleeve (61 a, 62a, 63a) in response to an axial movement of the sleeve (61 a, 62a, 63a), a shift actuator (66, 67, 68) moving the sleeve (61 a, 62a, 63a) in the axial direction for engaging the engaging teeth (61 b, 62b, 63b) of the sleeve (61 a, 62a, 63a) with the engaged teeth (43a, 44a, 45a, 51 a, 52a) of the corresponding idler gear (43, 44, 45, 51, 52) in a manner that the sleeve (61 a, 62a, 63a) is non-rotatable relative to the corresponding idler gear (43, 44, 45, 51, 52), and for disengaging the sleeve (61 a, 62a, 63a) from the corresponding idler gear (43, 44, 45, 51, 52) and moving the sleeve (61 a, 62a, 63a) to a neutral position at which the sleeve (61 a, 62a, 63a) is rotatable relative to the corresponding idler gear (43, 44, 45, 51, 52), the transmission (TM) corresponding to a dog-clutch type transmission (TM);
a clutch (C) arranged between the drive shaft (EG-1) and the input shaft (31) for selectively connecting the drive shaft (EG-1) and the input shaft (31);
a clutch actuator (29) driving the clutch (C);
an accelerated/decelerated travelling determination portion (11) determining a decelerated travelling state caused by a brake (37) of a vehicle (M) and an accelerated traveling state caused by an accelerator (36) of the vehicle (M);
a gear stage determination portion (13) determining a gear stage to be changed to, on the basis of at least one down-shift curve pre-set based on a throttle valve opening degree and a vehicle speed, on the basis of a travelling state of the vehicle; and
a shift operation control portion (13) controlling the clutch actuator (29) to disconnect the clutch (C) in a case where the accelerated/decelerated travelling determination portion (11) determines that the decelerated travelling state of the vehicle corresponds to a sudden braking state on the basis of a brake operation state, the shift operation control portion (13) controlling the shift actuator (66, 67, 68) to move the sleeve (61a, 62a, 63a), out of the plurality of sleeves (61a, 62a, 63a), which is in an engagement state with the idler gear (43, 44, 45, 51, 52) to the neutral position in a case where the gear stage determination portion (13) determines that the down-shift curve is crossed, the shift operation control portion (13) maintaining all the sleeves (61a, 62a, 63a) in a stand-by state at the neutral position while the accelerated/decelerated travelling determination portion (11) maintains the determination that the vehicle is in the sudden braking state even in a case where the gear stage determination portion (13) determines that the further down-shift curve is crossed.

2. The automated transmission control apparatus according to claim 1, wherein the shift operation control portion (13) moves the sleeve (61 a, 62a, 63a), out of the plurality of sleeves (61 a, 62a, 63a), which corresponds to the idler gear (43, 44, 45, 51, 52) configuring a first gear stage, from the neutral position to engage with the idler gear (43, 44, 45, 51, 52) configuring the first gear stage in a case where the gear stage determination portion (13) determines that the down-shift curve is crossed from a second speed to a first speed.

3. The automated transmission control apparatus according to any of claim 1 or 2, wherein the shift operation control portion (13) controls the sleeve (61 a, 62a, 63a) corresponding to the idler gear (43, 44, 45, 51, 52) configuring the gear stage determined by the gear stage determination portion (13) to engage with the idler gear (43, 44, 45, 51, 52) configuring the gear stage determined by the gear stage determination portion (13) in a case where the accelerated/decelerated travelling determination portion (11) determines that the brake (37) is released and the accelerator (36) is depressed, and an acceleration request is made in a state where all the sleeves (61a, 62a, 63a) are in the stand-by state at the neutral positions.

4. The automated transmission control apparatus according to any of claims 1 to 3, wherein
the accelerated/decelerated travelling determination portion (11) determines the sudden braking state on the basis of a brake sensor (39) detecting a depressing state of the brake pedal (37), and
the accelerated/decelerated travelling determination portion (11) determines the sudden braking state in any case where a threshold value (1) of a brake stroke at the brake operation is detected for a predetermined time period (2) or longer, a case where a depressing speed of the brake pedal (37) exceeds a predetermined threshold value, or where a temporal change amount of deceleration of the vehicle (M) exceeds a predetermined threshold value.

5. The automated transmission control apparatus according to any of claims 1 to 4, wherein the accelerated/decelerated travelling determination portion (11) maintains the determination of the sudden braking state until the brake stroke decreases to a predetermined value or lower, or until the depressing of the brake pedal (37) is released.
